(19) Europäisches Patentamt / European Patent Office / Office européen des brevets

(11) **EP 3 201 705 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **15757485.6**

(22) Anmeldetag: **02.09.2015**

(51) Int Cl.:
**G05B 19/19** *(2006.01)* **G05B 11/42** *(2006.01)*
**B62D 6/00** *(2006.01)*

(86) Internationale Anmeldenummer:
**PCT/EP2015/069987**

(87) Internationale Veröffentlichungsnummer:
**WO 2016/050433 (07.04.2016 Gazette 2016/14)**

(54) **VERFAHREN ZUR REGELUNG EINES ELEKTRISCHEN STELLANTRIEBS**

METHOD FOR CONTROLLING AN ELECTRIC ACTUATOR

PROCÉDÉ DE RÉGLAGE D'UN MÉCANISME DE COMMANDE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2014 DE 102014014313**
**22.05.2015 DE 102015006491**

(43) Veröffentlichungstag der Anmeldung:
**09.08.2017 Patentblatt 2017/32**

(73) Patentinhaber: **thyssenkrupp Presta AG**
**9492 Eschen (LI)**

(72) Erfinder: **SIGILLÓ, Michele**
**CH-8400 Winterthur (CH)**

(74) Vertreter: **thyssenkrupp Intellectual Property GmbH**
**ThyssenKrupp Allee 1**
**45143 Essen (DE)**

(56) Entgegenhaltungen:
**EP-A1- 1 742 124 DE-A1-102004 024 243**
**JP-A- S57 167 868 US-A- 3 758 762**
**US-A1- 2010 250 068**

- **W.E. Dixon ET AL: "Nonlinear Control of Engineering Systems A Lyapunov-Based Approach /Passage/" In: "Nonlinear Control of Engineering Systems A Lyapunov-Based Approach", 1 January 2003 (2003-01-01), Birkhauser, XP055553193, pages 4pp, xiii, viii, 4-5, 1pp, * the whole document ***
- **PATRE P M ET AL: "Asymptotic Tracking for Systems With Structured and Unstructured Uncertainties", IEEE TRANSACTIONS ON CONTROL SYSTEMS TECHNOLOGY, IEEE SERVICE CENTER, NEW YORK, NY, US, vol. 16, no. 2, 1 March 2008 (2008-03-01), pages 373-379, XP011203482, ISSN: 1063-6536**
- **S. Hesse: "6.3.5 Bahnplanung" In: "Industrieroboterpraxis: Automatisierte Handhabung in der Fertigung", 1 January 1998 (1998-01-01), Vieweg+Teubner Verlag, XP055553210, pages ix, 187-190, * the whole document ***

EP 3 201 705 B1

**Beschreibung**

Die vorliegende Erfindung betrifft ein Verfahren zur Regelung eines elektrischen Stellantriebes einer elektromechanischen Lenkung.

Die klassischen Regelansätze mit P-Reglern, PI-Reglern oder PID-Reglern sind nicht gut geeignet für die hohen dynamischen Anforderungen im Hinblick auf minimale Regelabweichungen und dynamische Störgrößen, wie sie im Betrieb von Kraftfahrzeugen auftreten.

In Lenksystemen mit elektrischer Hilfskraftunterstützung, auch elektrischen Servolenkungen genannt, werden zum Beispiel Kugelumlaufgetriebe zur Umsetzung der Drehbewegung eines Elektromotors in eine Axialbewegung der Zahnstange eingesetzt. Dabei kann der Elektromotor neben der mechanischen Verbindung zwischen Lenkhandhabe und Zahnstange als elektrischer Hilfsantrieb dienen oder für eine Steer-by-Wire-Lenkung eingesetzt werden. Bei Steer-by-Wire-Lenkungen wird der vom Fahrer an der Lenkhandhabe eingestellte Lenkwunsch den lenkbaren Fahrzeugrädern nicht auf direktem mechanischen Weg übermittelt, sondern auf elektrischem oder hydraulischem Weg. Entsprechend dem Stand der Technik wird das vom Fahrer an der Lenkhandhabe aufgebrachte Lenkmoment von einem Lenkmomentsensor gemessen. In Abhängigkeit von der aus dem Lenkmomentsensor stammenden Information über das Handlenkmoment werden Steuerbefehle an eine Stelleinrichtung des Elektromotors gegeben. Im Falle einer Steer-by-Wire-Lenkung wird anstelle des aufgebrachten Lenkmoments ein vom Fahrer aufgebrachter Lenkwinkel gemessen und daraus Steuerbefehle für den Elektromotor zur Ansteuerung der Lenkung bestimmt. Ein Regelalgorithmus berechnet das benötigte Drehmoment des Elektromotors, um die Zahnstange in die gewünschte Position zu bringen.

Der Regelalgorithmus oder das Regelverfahren sind bevorzugt so ausgelegt, dass die Position des elektrischen Antriebs, im Falle der Regelung einer elektrischen Servolenkung entsprechend die Position der Zahnstange, mit möglichst geringer Zeitverzögerung und ohne Überschwingungen dem vorgegeben Sollwert folgt. Außerdem ist es erwünscht, dass die Positionsregelung ein robustes und gegenüber internen und externen Störgrößen unempfindliches Regelverhalten aufweist.

Herkömmlicherweise sind diese Regelalgorithmen auf den eingangs erwähnten klassischen Regelsystemen mit P-, PI- oder PID Reglern aufgebaut, die auf einer linearen, zeitinvarianten mathematischen Beschreibung der Fahrzeuglenkung basieren. Die Qualität der Regelung hängt dabei hauptsächlich von der Genauigkeit des mathematischen Modells und der Linearität des Systems ab. Im Falle von Lenksystemen für Kraftfahrzeuge sind diese klassischen Regelansätze in der Regel nicht geeignet den hohen dynamischen Anforderungen des Betriebes im Kraftfahrzeug gerecht zu werden. Linearitätsabweichungen oder zeitabhängige Störungen des Systems, zum Beispiel durch Änderungen der Fahrzeugdynamik, die unter anderem abhängig ist vom Straßen- und Beladungszustand, können dabei nur begrenzt von den herkömmlichen Regelsystem gehandhabt werden. Diese internen und externen Störgrößen haben erheblichen Einfluss auf die Stabilität und die Regelgenauigkeit einer Lenkung.

Aus US 2010/0250068 A1 ist eine Fahrzeuglenkvorrichtung bekannt, bei der ein Soll-Drehwinkel auf Basis eines Lenkwinkels und einer Fahrzeuggeschwindigkeit berechnet wird. Ein Drehwinkelkorrektur-Berechnungsteil berechnet auf Basis einer ersten Übertragungsfunktion eine zweite Übertragungsfunktion, sowie einen Korrekturdrehwinkel als Produkt aus der zweiten Übertragungsfunktion mit einer Soll-Drehwinkelgeschwindigkeit, wobei der Drehwinkel, die Drehwinkelgeschwindigkeit und eine Fahrzeuggierrate in die Berechnung eingehen.

EP 1 742 124 A1 beschreibt ein Servo-Steuergerät, das zur Hilfskraftlenkung eines Fahrzeugs eingesetzt wird. Das Servo-Steuergerät umfasst zwei Integrierer zur Reduzierung einer Phasenverzögerung bei der Ansteuerung.

Es ist daher Aufgabe der vorliegenden Erfindung, ein Regelverfahren und einen entsprechenden Regelalgorithmus zur Regelung eines elektrischen Stellantriebs bereitzustellen, das eine verbesserte Regelgenauigkeit mit geringen Überschwingungen aufweist.

Diese Aufgabe wird durch ein Verfahren mit den Merkmalen des Anspruchs 1 sowie durch eine elektromechanische Kraftfahrzeuglenkung mit den Merkmalen des Anspruchs 15 gelöst. In den Unteransprüchen sind vorteilhafte Weiterbildungen der Erfindung dargestellt.

Die Sollposition Xd ist nicht als feststehender Wert, sondern als vom jeweiligen Fahrzustand abhängiger Wert zu verstehen. Insbesondere ein eingegebener Lenkwinkel ist während der Fahrt variabel und demzufolge als Funktion von der Zeit darstellbar.

Durch diese Regelung wird der Stellantrieb mit einer verbesserten Regelgenauigkeit mit geringen Überschwingungen angesteuert.

Es kann vorgesehen sein, dass die Stellgröße T1 des Stellmotors unter Verwendung der zeitlichen Ableitung der Ist-Position dX/dt berechnet wird.

Es kann auch vorgesehen sein, dass die Stellgröße T1 des Stellmotors unter Verwendung des zeitlichen Integrals der Abweichung ΔX zwischen der Soll-Position Xd und der Ist-Position X entsprechend $\int_{t0}^{t} \left( \Delta X \big|_{\tau} \right) d\tau$ berechnet wird.

In einer bevorzugten Ausführungsform berechnet sich die Stellgröße T1 als $T1 = \frac{1}{UV} * \{Y\}$ , wobei Y eine Summe ist und die Summanden P = μ * a1 * K1 * (ΔX - Δx|$_0$) und $DD = U2 * \frac{d^2Xd}{dt^2} * F2$ aufweist, und wobei die Variablen wie folgt definiert sind:

> $UV$ = Übersetzungsverhältnis oder Reglerverstärkung,
> K1, $a1$ = Tuning - Parameter,
> F2 = Wichtungsfunktion,
> U2 = Wichtungsfaktor,
> μ = Wichtungsfaktor.

Dabei kann vorgesehen sein, dass die Größe Y den Summanden $I1 = μ * a1 * \eta * a2 * K1 * \int_{t0}^{t} (\Delta X|_{\tau}) \, d\tau$ aufweist, wobei die Variable a2 ein Tuning-Parameter ist und $\eta$ ein weiterer Wichtungsfaktor ist.

Alle Wichtungsfaktoren, wie die bereits eingeführten Wichtungsfaktoren μ und η, spielen dabei für die softwaretechnische Umsetzung eine nur untergeordnete Rolle. Sie können ohne weiteres den Zahlenwert 1 besitzen. Physikalisch dienen sie zur Adaption der Maßeinheiten.

Weiterhin kann es zur Verbesserung des Reglerverhaltens vorgesehen sein, dass die Größe Y die Summanden $D1 = K1 * \frac{d(\Delta X - \Delta X|_0)}{dt}$ und/oder $D2 = U1 * \frac{dX}{dt} * F1$ aufweist, wobei $U1$ ein Wichtungsfaktor und $F1$ eine Wichtungsfunktion ist.

Bevorzugt kann es dabei vorgesehen sein, dass die Größe Y die beiden Summanden $D1 = K1 * \frac{d(\Delta X - \Delta X|_0)}{dt}$ und $D2 = U1 * \frac{dX}{dt} * F1$ aufweist.

Die Größe Y kann auch den Summanden $I2 = a2 * K1 * \int_{t0}^{t} d(\Delta X|_{\tau})/dt \, d\tau$ aufweisen.

Weiterhin kann die Größe Y den Summanden $S = \beta1 * \int_{t0}^{t} \text{SIGN} \left[ \frac{d(\Delta X|_{\tau})}{dt} + μ * a1 * (\Delta X|_{\tau}) \right] * d\tau$ aufweisen, wobei β1 ein Tuning-Parameter ist.

Die Größe Y kann zudem den Summanden $DD2 = U3 * \frac{dX}{dt^2} * F2$ aufweisen, wobei $U3$ ein weiterer Wichtungsfaktor und F2 eine weitere Wichtungsfunktion ist.

In einer bevorzugten Ausführungsform wird die Stellgröße T1 des Stellmotors als $T1 = \frac{1}{UV} * \{Y\}$ mit $Y = P + DD + I1 + D1 + D2 + I2 + S$ T1 berechnet.

Es kann vorgesehen sein, dass $F1$ und/oder $F2$ eine konstante Funktion ist.

Es kann zudem vorgesehen sein, dass $F1$ und/oder $F2$ durch cos (ω3 * t) + λ * |ΔX |* [e$^{(-q1 * (t- t0) - q2 * |ΔX|)}$ + cos (ω2 * t)] und/oder sin (ω3 * t) + λ * |ΔX |* [e$^{(-q1 * (t - t0) - q2 * |ΔX|)}$ + sin (ω2 * t)] bestimmt ist, wobei q1 und q2 weitere Wichtungsfaktoren sind.

Das vorgeschlagene Verfahren zur Regelung eines elektrischen Stellantriebs ist besonders geeignet für die Regelung einer elektromechanischen Lenkung.

Dabei ist die Zustandsgröße des Stellantriebs die Position der Zahnstange und/oder der Verschwenkungswinkel eines Rades.

In einer vorteilhaften Ausführungsform ist der Stellmotor ein Elektromotor, der ein Antriebsmoment mittels eines Getriebes, beispielsweise eines Kugelgewindetriebs oder eines Schneckenradgetriebes, auf die Zahnstange überträgt.

Die Stellgröße T1 ist das von dem Stellmotor abgegebene Drehmoment, wobei auf Basis der Stellgröße T1 ein Sollstromwert und/oder ein Sollspannungswert bestimmt wird, der dem Stellmotor zugeführt wird. Es ist aber auch denkbar und möglich, direkt den Strom und/oder die Spannung, die den Wicklungen des Elektromotors zugeführt wird, als Stellgröße zu verwenden. Es sind dann in den oben dargestellten Berechnungsvorschriften entsprechende Umrechnungsfaktoren vorzusehen.

Das Regelverfahren, wie es in den Patentansprüchen 1 bis 3 dargestellt ist, ist dazu geeignet, ein gewünschtes Drehmoment für die Lenkbewegung eines Kraftfahrzeuges einzuregeln. In diesem Fall kann als die Position X, die die Zustandsgröße darstellt, das am Lenkrad der Lenkbewegung des Fahrers entgegenwirkende Gegenmoment (= das Rückstellmoment oder das Ist-Drehmoment), das dem Fahrer als Reaktion auf seine in das Lenkrad eingebrachte Lenkbewegung entgegengesetzt werden soll, angesetzt werden. Als Stellgröße T1 dient das vom Stellmotor abgegebene Drehmoment oder auch der dem Elektromotor zugeführte Strom. Als Soll-Position Xd ist entsprechend das gewünschte Soll-Drehmoment, das der Lenkbewegung entgegengesetzt werden soll, anzusetzen. Dabei kann das gewünschte Soll-Drehmoment beispielsweise von der Drehgeschwindigkeit der Lenkwelle und/oder der Änderung der Drehgeschwindigkeit der Lenkwelle abgeleitet werden. Zusätzlich können noch weitere Parameter, wie beispielsweise die Geschwindigkeit des Kraftfahrzeugs, zur Bestimmung des Soll-Drehmoments herangezogen werden. Die Werte können dabei vorbestimmt tabellarisch abgelegt sein oder mit einer Funktion zur Laufzeit berechnet werden. Das Ist-Drehmoment kann in einfacher Weise mit einem entsprechend dem Stand der Technik bekannten Drehmomentsensor bestimmt werden.

Weiterhin vorgesehen ist eine elektromechanische Kraftfahrzeuglenkung mit einem Regler, der dazu eingerichtet ist, ein Verfahren mit wenigstens einem der vorhergehend genannten Merkmale auszuführen.

Eine bevorzugte Ausführungsform der Erfindung wird nachfolgend anhand der Zeichnungen näher erläutert. Es zeigen:

Fig. 1 und 3:   schematische Darstellung einer elektromechanischen Lenkung, entsprechend Fig. 1 mit mechanischer Kopplung und entsprechend Fig. 3 in Steer-by-wire Bauart ohne mechanische Kopplung zwischen Lenkrad und gelenkten Rädern, sowie

Fig. 2:   eine schematische Darstellung der Regelung der elektromechanischen Lenkung aus Fig. 1 oder 3.

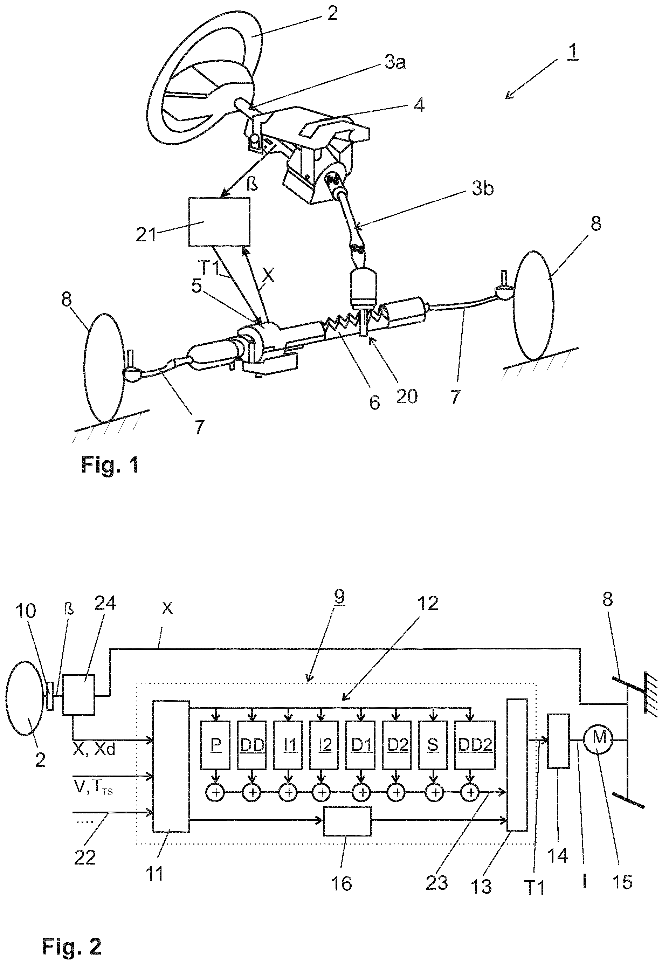

Figur 1 zeigt eine schematische Darstellung einer Lenkung 1 mit elektrischer Hilfskraftunterstützung mit einem Lenkrad 2, einer Lenkwelle 3a, 3b einer Konsole 4, einem Stellantrieb 5 und einer Zahnstange 6. Im Beispiel ist eine elektromechanische Hilfskraftlenkungen gezeigt, bei der ein mechanischer Durchgriff vom Lenkrad 2 zu einem Lenkgetriebe 20 und letztendlich zu den Rädern 8 vorhanden ist. Das Lenkrad 2 ist mit der Lenkwelle 3a verbunden. Die Lenkwelle 3a ist in der Konsole 4 axial und in der Höhe verstellbar gelagert. Über eine mit der Lenkwelle 3a drehfest gekoppelten unteren Lenkwelle 3b erfolgt eine Übertragung der Drehung des Lenkrads in ein Lenkgetriebe 20, wodurch eine axiale Verschiebung der Zahnstange 6 und entsprechend eine Verschwenkung der Räder 8 erfolgt. Zur Unterstützung der Lenkbewegung dient als elektrische Hilfskraftunterstützung der Stellantrieb 5, der über eine Steuerung 21 angesteuert wird, und die Verschwenkung der Räder 8 unterstützt. In der Konsole 4 ist auch ein nicht dargestellter Lenksensor angeordnet, der den aktuellen Drehwinkel, also die Lage der Lenkwelle 3a und damit des Lenkrades 2 erfasst. Der aktuelle Drehwinkel $\beta$ der Lenkwelle 3a, der auch als Lenkwinkel bezeichnet wird, repräsentiert im Beispiel eine mit der Sollposition Xd verknüpfte Größe. Zur Darstellung der Verschwenkung der Räder durch die axiale Verschiebung der Zahnstange 6 ist diese an ihren freien Enden mit Spurstangen 7 verbunden und über diese Spurstangen 7 mit lenkbaren Rädern 8 gekoppelt. Die Zahnstange 6 ist in einem nicht dargestellten Lenkungsgehäuse in ihrer Längsrichtung verschiebbar gelagert. Der Stellantrieb 5 zur Unterstützung der Lenkbewegung weist einen nicht dargestellten Stellmotor M und ein Getriebe auf. Das Ausgangsmoment des Stellmotors M wird mittels einer nicht dargestellten Antriebswelle des Elektromotors auf die Zahnstange 6 und damit auf die Räder 8 übertragen. Wegen der erheblichen zu übertragenden Kräfte wirkt die Antriebswelle des Elektromotors in der Regel über einen nicht näher dargestellten Kugelgewindetrieb auf die Zahnstange 6. Es sind aber auch andere Koppelgetriebe denkbar und möglich, wie dies im Stand der Technik hinreichend bekannt ist. Der Stellantrieb 5 wird über eine elektronische Steuerung 21 angesteuert. Für die Ansteuerung empfängt die Steuerung über eine Signalleitung Signale des Lenksensors und wertet diese in einer entsprechenden Regeleinheit aus.

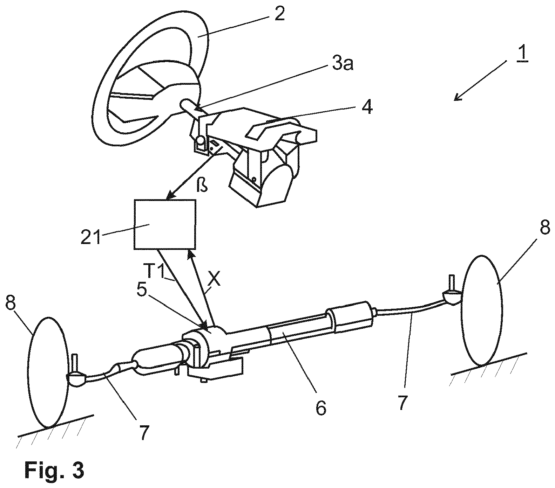

Die erfindungsgemäße Lehre ist auch auf Servolenkungen mit hydraulischer Hilfskraftunterstützung sowie auf Servolenkungen vom Steer-by-wire-Typ anwendbar. Servolenkungen vom Steer-by-Wire-Typ besitzen keinen mechanischen Durchgriff vom Lenkrad 2 auf das Lenkgetriebe 20. Dies wäre im Beispiel durch ein Lenksystem, bei dem die untere Lenkwelle 3b nicht vorhanden ist, gegeben, wie dies in Figur 3 veranschaulicht ist. Die Zahnstange 6 kann dann auch als Schubstange ohne Verzahnung ausgebildet sein, die im Beispiel entsprechend Figur 3 ausschließlich über den Stellantrieb 5 verschoben wird.

Figur 2 zeigt eine schematische Darstellung der Regeleinheit 9 der elektromechanischen Hilfskraftlenkung aus Figur 1 oder Figur 3. Der von einem Fahrer am Lenkrad 2 aufgebrachte Lenkwinkel $\beta$ wird in dem Lenksensor 10 gemessen. Daraus wird in einer Signalverarbeitungseinheit 24 eine Sollposition Xd bestimmt. Die ermittelte Sollposition Xd sowie eine Ist-Position der Zahnstange 6 oder des Verschwenkwinkels des Rades 8 als Ist-Wert X wird an die Regeleinheit übermittelt. Als mögliche weitere Eingangsgrößen sind im Beispiel die Fahrzeuggeschwindigkeit V und/oder das am Lenkrad aufgebrachte Drehmoment $T_{TS}$ und/oder weitere gemessene oder berechnete Größen 22 vorgesehen. Nach einer Vorverarbeitung 11 der Eingangsgrößen kommt die Regelungsstrecke 12, die schließlich in einer Ausgangsgröße 23 resultiert. Nach einer Nachbearbeitung 13 stellt die Ausgangsgröße eine Sollgröße, das Stelldrehmoment T1 des Elektromotors dar. Bei der erfindungsgemäßen Regelung wird ein jeweiliges Stelldrehmoment T1 des Elektromotors zu einem jeweiligen Zeitpunkt bestimmt. Auf Basis dieses Stelldrehmoments T1 wird dann in bekannter Weise im Elektroantrieb (PWM) 14 ein jeweiliger Sollstrom I bestimmt, der dem Elektromotor 15, der das Drehmoment aufbringt, zugeführt wird. Es können parallel zur Regelstrecke spezielle Verarbeitungsschritte 16 vorgesehen sein, die auch Auswirkungen auf das Stelldrehmoment T1 haben können.

Das Stelldrehmoment T1 wird in der Regelstrecke auf Basis der erreichten Änderung der Positionsabweichung $(\Delta X - \Delta X|_0)$ und auf Basis der zweiten zeitlichen Ableitung der Soll-Position $\frac{d^2X}{dt^2}$, der Stellbeschleunigung bestimmt.

Eine weitere Verbesserung kann erreicht werden, wenn die zeitliche Ableitung der Ist-Position $\frac{dX}{dt}$ und/oder die zweite zeitliche Ableitung der Soll-Position $\frac{d^2Xd}{dt^2}$, zur Berechnung des Stelldrehmoments T1 genutzt wird.

Weiterhin verbessert werden kann die Regelung, wenn zusätzlich die integrale Stelländerung und noch weiter die bereits verrichtete Lenkarbeit sowie die Schwankung in Form der zeitlichen Integration der Stellrichtung mit in die Bestimmung des Stelldrehmoments T1 einbezogen wird.

In der dargestellten Ausführungsform berechnet sich das Stelldrehmoment des Elektromotors T1 aus der Summe $T1 = \frac{1}{UV} * \{P + I1 + I2 + D1 + D2 + DD + S\}$ von:

- Proportionalteil (P):

$$P \quad = \mu * a1 * K1 * \left(\Delta X - \Delta X|_0\right)$$

Produkt aus der erreichten Änderung der Positionsabweichung multipliziert mit einem konstanten ersten Faktor K1;

- Doppeldifferentialanteil (DD):

$$DD \quad = U2 * \frac{d^2Xd}{dt^2} * F2$$

Produkt aus der zweiten zeitlichen Änderung der Sollposition Xd und einem zweiten Faktor F2, der konstant oder durch eine Funktion dargestellt ist. Dieser Term DD entspricht der Stellbeschleunigung;

- erster Integralanteil (I1):

$$I1 \quad = \mu * a1 * \eta * a2 * K1 * \int_{t0}^{t} \left(\Delta X|_\tau\right) d\tau$$

zeitliches Integral aus der Stellpositionsabweichung, multipliziert mit dem konstanten ersten Faktor K1 und multipliziert mit zwei Konstanten $\mu * \alpha 1$ und $\eta * \alpha 2$, dieser Term entspricht der momentan verrichteten Stellarbeit;

- zweiter Integralanteil (I2):

$$I2 \quad = a2 * K1 * \int_{t0}^{t} d(\Delta X|_\tau)/dt \, d\tau$$

zeitliches Integral aus der zeitlichen Änderung der Stellpositionsabweichung, die mit dem konstanten ersten Faktor K1 und mit der zweiten Konstante $\alpha 2$ multipliziert wird, dieser Term dient als Maß für die aufgelaufenen Schwankungen bzw. Änderungen der Stellpositionsabweichung;

- erster Differentialanteil (D1):

$$D1 = K1 * \frac{d(\Delta X - \Delta X|_0)}{dt}$$

Produkt aus der zeitlichen Änderung der erreichten Stelländerung multipliziert mit dem ersten konstanten Faktor K1;

- zweiter Differentialanteil (D2):

$$D2 = U1 * \frac{dX}{dt} * F1$$

Produkt aus der zeitlichen Änderung der Position multipliziert mit dem ersten Faktor F1, der konstant oder durch eine Funktion dargestellt ist, und multipliziert mit der ersten Konstante U1. Dieser Term entspricht der Stellgeschwindigkeit;

- Integrale Schwankung der Stellrichtung (S):

$$S = \beta1 * \int_{t0}^{t} SIGN\left[\frac{d(\Delta X|_{\tau})}{dt} + \mu * a1 * (\Delta X|_{\tau})\right] * d\tau$$

Integral aus der Summe der integrierten Richtung der Geschwindigkeit der Stellpositionsabweichung und der Stellpositionsabweichung. Dieser Term entspricht der Verluste im Regelsystem, insbesondere der Reibung.

Die Kurzzeichen in den Formeln und in der Beschreibung sind entsprechend den folgenden Angaben definiert:

*X = Ist - Position*
*Xd = Sollposition*
$\Delta X|_{\tau}$ = *Differenz Soll - Ist - Position zum Zeitpunkt $\tau$*
$\Delta X|_0$ = *Differenz Soll - Ist - Position zum Zeitpunkt t = t0*
*UV = Übersetzungsverhältnis - Reglerverstärkung*
*K1, a1, a2, $\beta$1 = Tuning - Parameter*
$\omega1, \omega2, \omega3$ = *Kreisfrequenzwerte* (*bevorzugt $\omega1$ = 3/s, $\omega2$ = 1/s, $\omega3$ = 2/s,* wobei "s" für die Maßeinheit Sekunde steht.)
*U1, U2, q1, q2 = Wichtungsfaktoren.* Dabei sind die Tuning-Parameter und die Kreisfrequenzwerte und die Wichtungsfaktoren bevorzugt alle ungleich Null.

Ausgangspunkt der besonders bevorzugten Ausführungsform dieser Reglung ist der Stabilitätssatz von Ljapunow. Der Ljapunow-Ansatz sagt aus, dass ein System dadurch stabil wird, dass dem System ständig Energie entzogen wird. Im Falle eines passiven Systems erfolgt dieser Entzug von Energie normalerweise durch Reibung. Entsprechend dem Ljapunow-Ansatz wird hier der Stellgröße der Term S aufgeprägt. Der Term S entspricht einer künstlich erzeugten Reibung, die gemäß dem Stabilitätssatz von Ljapunow äußeren Destabilisierungseinflüssen entgegen wirkt.
S kann als Maß für die Güte der Regelung verwendet werden. Wenn das Vorzeichen andauernd wechselt, ist der Regler nicht genau genug ausgelegt. Die Parameter, wie die Konstanten und Faktoren, können dann entsprechend adaptiert werden. Dies kann im Regler automatisch erfolgen. Mit der automatischen Adaption kann eine Anpassung an das jeweilige Fahrzeug und besonders an den jeweiligen Fahrer erreicht werden. Zur Erhöhung der Systemdynamik werden die Faktoren F1 und F2 durch Funktionen gebildet.
In einer ersten Ausführungsform sind F1 und F2 wie folgt bestimmt:

$$F1 = \sin(\omega1 * t) \ , \ F2 = \cos(\omega3 * t).$$

In einer zweiten Ausführungsform sind F1 und F2 durch

$$F1 = \sin(\omega1 * t) + \lambda * |\Delta X| * [\sin(\omega2 * t)] \ \text{und} \ F2 = \cos(\omega3 * t) + \lambda * |\Delta X| * [\cos(\omega2 * t)]$$

bestimmt, wobei λ ein weiterer Wichtungsfaktor ist.

Und in einer bevorzugten Ausführungsform sind F1 und F2 gegeben durch:

$$F1 = \sin(\omega 1 * t) + \lambda * |\Delta X| * [e^{(-q1*(t-t0) - q2*|\Delta X|)} + \sin(\omega 2 * t)]$$

und

$$F2 = \cos(\omega 3 * t) + \lambda * |\Delta X| * [e^{(-q1*(t-t0) - q2*|\Delta X|)} + \cos(\omega 2 * t)].$$

Es ist dabei denkbar und möglich, die sin-Funktion in F1 durch eine cos-Funktion auszutauschen und gleichzeitig die cos-Funktion in F2 durch eine sin-Funktion auszutauschen.

Weiter ist es denkbar und möglich für F1 und/oder F2 eine beliebige Kombination der zuvor genannten Funktionen für F1 und F2 im Regler einzusetzen. Insbesondere kann für F1 eine konstante Größe oder eine der zuvor genannten Funktion und für F2 ebenfalls eine konstante Größe oder eine der zuvor genannten Funktionen im Regler eingesetzt werden.

Die Funktionen F1 und F2 prägen der Sollgröße eine sinusförmige bzw. cosinusförmige Anregung, sowie im Fall der bevorzugten Ausführungsform ein exponentielles Abklingen auf. Dadurch kann der Ansatz "Persistence of excitation" (Erhaltung der Erregung) verfolgt werden.

Die Zeit t wird in der Regelung von t auf t0 zurückgesetzt, wenn das Auto gestartet wird oder wenn beispielsweise die Stellgröße Null ist. Die Zeit t kann auch bei jedem Beginn der Bewegung des Kraftfahrzeugs nach einem Anhalten von t auf t0 zurückgesetzt werden.

In einer weiteren Ausführungsform kann zusätzlich ein zweiter Doppeldifferentialanteil DD2 eingesetzt werden:

$$DD2 = U3 * \frac{d^2X}{dt^2} * F2,$$ wobei U3 ein weiterer Wichtungsfaktor ist.

Die Stellgröße T1 berechnet sich dann zu:

$$T1 = \frac{1}{UV} * \{P + DD + I1 + I2 + D1 + D2 + S + DD2\}.$$

Zusätzlich können in den Ausführungsformen noch weitere spezielle Verarbeitungen von Drehmoment, Fahrzeuggeschwindigkeit, Lenkwinkel, Lenkwinkelgeschwindigkeit und weiteren Größen vorgesehen sein, beispielsweise für Sicherheitsfunktionen oder andere Spezialfunktionen die in der Vorverarbeitung 11 oder in den speziellen Verarbeitungsschritten 16 eine Rolle spielen. Es ist auch denkbar und möglich, die Tuning-Parameter auf Basis weiterer Messgrößen oder berechneten Größen, wie beispielsweise von Drehmoment und/oder Fahrzeuggeschwindigkeit und/oder Lenkwinkel und/oder Lenkwinkelgeschwindigkeit und/oder anderen Größen zu variieren.

Es ist selbstverständlich, dass zur Berechnung der Stellgröße T1 durch den Regler nicht sämtliche der aufgezählten Terme berücksichtigt werden müssen.

Wie zuvor bereits beschrieben, können die genannten Terme einzeln oder in verschiedensten Kombinationen berücksichtigt werden. So hat sich im Rahmen der Entwicklung gezeigt, dass der Term S zur Darstellung der Regelung nicht stets erforderlich ist. Je nach Komplexität des zu regelnden Systems können bereits Verbesserungen des Regelverhaltens gegenüber dem Stand der Technik auf Basis des in Patentanspruch 1 dargestellten Regelverfahrens erreicht werden. Durch die Hinzunahme von weiteren Termen, wie sie in den Patentansprüchen und in der Beschreibung erläutert sind, kann das Regelverhalten jeweils verbessert und an mehr komplexe Systeme angepasst werden.

Das erfindungsgemäße Verfahren zur Regelung einer elektromechanischen Servolenkung für ein Kraftfahrzeug weist auch bei Linearitätsabweichungen oder zeitabhängigen Störungen des Systems eine sehr hohe Regelgenauigkeit des elektrischen Antriebs mit sehr geringen Überschwingungen auf. Obwohl die Regelung nur Obergrenzen für die Parameter und keine exakten Werte verarbeitet, wird eine hohe Präzision der Stellgröße des elektrischen Antriebs durch die erfindungsgemäße Regelung erreicht.

**Patentansprüche**

1. Verfahren zur Regelung eines elektrischen Stellantriebs einer elektromechanischen Hilfskraftlenkung mit einer Regeleinheit, bei dem von einer Steuerung

- eine Stellgröße T1 eines Stellmotors bestimmt wird, die das von dem Stellmotor abgegebene Drehmoment ist, wobei auf Basis der Stellgröße T1 ein Sollstromwert und/oder ein Sollspannungswert bestimmt wird, der dem Stellmotor zugeführt wird,
- um ausgehend von einer Ist-Position X als Zustandsgröße des Stellantriebs, die die Position einer Zahnstange (6) und/oder ein Verschwenkungswinkel eines Rades ist,
- eine Sollposition Xd als Sollposition zu erreichen, wobei ein von einem Fahrer an einem Lenkrad aufgebrachter Lenkwinkel in einem Lenksensor (10) gemessen wird, daraus in einer Signalverarbeitungseinheit (24) die Sollposition Xd bestimmt wird und die ermittelte Sollposition Xd sowie die Ist-Position der Zahnstange (6) oder des Verschwenkwinkels des Rades (8) als Ist-Wert X an die Regeleinheit übermittelt wird, und bei dem
- auf Basis der Stellgröße T1 ein Stellwert des elektrischen Stellantriebs berechnet wird,

**dadurch gekennzeichnet, dass** die Stellgröße T1 des Stellmotors unter Verwendung der zweiten zeitlichen Ableitung der Soll-Position $d^2Xd/dt^2$ und einer erreichten Stelländerung $\Delta X|_\tau$ - $\Delta X|_0$ berechnet wird, wobei $\Delta X|_\tau$ = *Differenz Soll - Ist - Position zum Zeitpunkt* $\tau$ und

$$\Delta X|_0 = Differenz\ Soll - Ist - Position\ zum\ Zeitpunkt\ t = t0$$

ist.

2. Verfahren nach Anspruch 1, **dadurch gekennzeichnet, dass** die Stellgröße T1 des Stellmotors unter Verwendung der zeitlichen Ableitung der Ist-Position dX/dt berechnet wird.

3. Verfahren nach Anspruch 1 oder 2, **dadurch gekennzeichnet, dass** die Stellgröße T1 des Stellmotors unter Verwendung des zeitlichen Integrals der Abweichung $\Delta X$ zwischen der Soll-Position Xd und der Ist-Position X entsprechend $\int_{t0}^{t} (\Delta X|_\tau)\, d\tau$ berechnet wird.

4. Verfahren nach Anspruch 1, **dadurch gekennzeichnet, dass** die Stellgröße T1 berechnet wird als

$$T1 = \frac{1}{UV} * \{Y\}\ ,$$

wobei Y eine Summe ist und die Summanden P = $\mu * a1 * K1 * (\Delta X - \Delta X|_0)$ und $DD = U2 * \frac{d^2Xd}{dt^2} * F2$ aufweist, und wobei die Variablen wie folgt definiert sind:

UV = *Übersetzungsverhältnis oder Reglerverstärkung,*
$K1$, $a1$ = *Tuning - Parameter,*
$F2$ = *Wichtungsfunktion,*
$U2$ = *Wichtungsfaktor,*
$\mu$ = *Wichtungsfaktor.*

5. Verfahren nach Anspruch 4, **dadurch gekennzeichnet, dass** die Größe Y den Summanden $I1 = \mu * a1 * \eta * a2 * K1 * \int_{t0}^{t} (\Delta X|_\tau)\, d\tau$ aufweist, wobei die Variable $a2$ ein Tuning-Parameter ist und $\eta$ ein Wichtungsfaktor ist.

6. Verfahren nach Anspruch 4 oder 5, **dadurch gekennzeichnet, dass** die Größe *Y* die Summanden $D1 = K1 * \frac{d(\Delta X - \Delta X|_0)}{dt}$ und/oder $D2 = U1 * \frac{dX}{dt} * F1$ aufweist, wobei *U1* ein Wichtungsfaktor und *F1* eine Wichtungsfunktion ist.

7. Verfahren nach Anspruch 4 oder 5, **dadurch gekennzeichnet, dass** die Größe *Y* den Summanden $I2 = a2 * K1 * \int_{t0}^{t} d(\Delta X|_\tau)/dt\, d\tau$ aufweist.

8. Verfahren nach einem der vorhergehenden Ansprüche 4 bis 7, **dadurch gekennzeichnet, dass** die Größe *Y* den Summanden $S = \beta1 * \int_{t0}^{t} SIGN \left[ \frac{d(\Delta X|_{\tau})}{dt} + \mu * a1 * (\Delta X|_{\tau}) \right] * d\tau$ aufweist, wobei $\beta1$ ein Tuning-Parameter ist.

9. Verfahren nach einem der vorhergehenden Ansprüche 4 bis 8, **dadurch gekennzeichnet, dass** die Größe Y den Summanden $DD2 = U3 * \frac{d^2 X}{dt^2} * F2$ aufweist, wobei *U*3 ein weiterer Wichtungsfaktor und F2 eine weitere Wichtungsfunktion ist.

10. Verfahren nach einem der vorhergehenden Ansprüche 4 bis 9, **dadurch gekennzeichnet, dass** die Stellgröße T1 des Stellmotors berechnet wird als $T1 = \frac{1}{UV} * \{Y\}$ mit $Y = P + DD + I1 + D1 + D2 + I2 + S$.

11. Verfahren nach einem der vorhergehenden Ansprüche 4 bis 10, **dadurch gekennzeichnet, dass** *F*1 und/oder *F*2 eine konstante Funktion ist.

12. Verfahren nach einem der vorhergehenden Ansprüche 4 bis 10, **dadurch gekennzeichnet, dass** *F*1 und/oder *F*2 durch cos $(\omega3 * t) + \lambda * |\Delta X| * [e^{(-q1 * (t - t0) - q2 * |\Delta X|)} + \cos (\omega2 * t)]$ bestimmt ist, wobei $\lambda$, q1 und q2 weitere Wichtungsfaktoren.

13. Verfahren nach einem der vorhergehenden Ansprüche 4 bis 10, **dadurch gekennzeichnet, dass** *F*1 und/oder *F*2 durch sin$(\omega3 * t) + \lambda * |\Delta X| * [e^{(-q1 * (t - t0) - q2 * |\Delta X|)} + \sin (\omega2 * t)]$ bestimmt ist, wobei $\lambda$, q1 und q2 weitere Wichtungsfaktoren sind.

14. Verfahren nach einem der vorhergehenden Ansprüche, **dadurch gekennzeichnet, dass** der Stellantrieb ein Elektromotor ist, der ein Antriebsmoment mittels eines Kugelgewindetriebs auf die Zahnstange überträgt.

15. Elektromechanische Kraftfahrzeuglenkung mit einer Regeleinheit (9), wobei die Regeleinheit (9) dazu eingerichtet ist, ein Verfahren nach einem der vorhergehenden Ansprüche 1 bis 14 auszuführen.

**Claims**

1. A method for controlling an electric actuator of an electromechanical power steering system having a control unit, in which method

   - a manipulated variable T1 of an actuating motor is determined by a controller, the manipulated variable T1 being the torque output by the actuating motor, wherein a target current value and/or a target voltage value which is fed to the actuating motor is determined on the basis of the manipulated variable T1,
   - in order, starting from an actual position X as state variable of the actuator, which is the position of a rack (6) and/or a pivoting angle of a wheel,
   - to reach a target position Xd as target position, wherein a steering angle applied to a steering wheel is measured in a steering sensor (10), the target position Xd is determined therefrom in a signal processing unit (24) and the determined target position Xd as well as an actual position of the rack (6) or of the pivoting angle of the wheel (8) is transmitted to the control unit as actual value X, and in which
   - a control value of the electric actuator is calculated on the basis of the manipulated variable T1,
   **characterized in that** the manipulated variable T1 of the actuating motor is calculated by using the second time derivative of the target position $d^2Xd/dt^2$ and an achieved control change $\Delta X|_{\tau}- \Delta X|_{0}$, where
   $\Delta X|_{\tau} = $ *Difference target - actual position at time* $\tau$ and
   $\Delta X|_{0} = $ *Difference target - actual position at time t = t*0.

2. The method as claimed in claim 1, **characterized in that** the manipulated variable T1 of the actuating motor is calculated by using the time derivative of the actual position dX/dt.

3. The method as claimed in claim 1 or 2, **characterized in that** the manipulated variable T1 of the actuating motor is calculated by using the time integral of the deviation $\Delta$X between the target position Xd and the actual position X in accordance with $\int_{t0}^{t} \left( \Delta X|_{\tau} \right) d\tau.$

4. The method as claimed in claim 1, **characterized in that** the manipulated variable T1 is calculated as

$$T1 \ = \frac{1}{UV} * \{Y\} \, ,$$

where Y is a sum and has the summands P = $\mu$ * a1 * K1 * ($\Delta$X - $\Delta$X|$_0$) and $DD \ = U2 * \frac{d^2 Xd}{dt^2} * F2$ , and where the variables are defined as follows:

> UV = Transmission ratio or controller gain,
> K1, a1 = Tuning parameters,
> F2 = Weighting function,
> U2 = Weighting factor,
> $\mu$ = Weighting factor.

5. The method as claimed in claim 4, **characterized in that** the variable $Y$ has the summands $I1 = \mu * a1 * \eta * a2 * K1 * \int_{t0}^{t} \left( \Delta X|_{\tau} \right) d\tau,$ where the variable $a2$ is a tuning parameter and $\eta$ is a weighting factor.

6. The method as claimed in claim 4 or 5, **characterized in that** the variable $Y$ has the summands $D1 = K1 * \frac{d(\Delta X - \Delta X|_0)}{dt}$ and/or $D2 \ = U1 * \frac{dX}{dt} * F1,$ where $U1$ is a weighting factor and F1 is a weighting function.

7. The method as claimed in claim 4 or 5, **characterized in that** the variable $Y$ has the summands $I2 = a2 * K1 * \int_{t0}^{t} d(\Delta X|_{\tau})/dt \, d\tau.$

8. The method as claimed in one of the preceding claims 4 to 7, **characterized in that** the variable $Y$ has the summands $S = \beta1 * \ \int_{t0}^{t} SIGN \left[ \frac{d(\Delta X|_{\tau})}{dt} + \mu * \ a1 * (\Delta X|_{\tau}) \right] * d\tau,$ where $\beta1$ is a tuning parameter.

9. The method as claimed in one of the preceding claims 4 to 8, **characterized in that** the variable $Y$ has the summands $DD2 \ = U3 * \frac{d^2 X}{dt^2} \ * F2,$ where $U3$ is a further weighting factor and F2 is a further weighting function.

10. The method as claimed in one of the preceding claims 4 to 9, **characterized in that** the manipulated variable T1 of the actuating motor is calculated as $T1 \ = \frac{1}{UV} * \{Y\},$ with $Y = P + DD + I1 + D1 + D2 + I2 + S.$

11. The method as claimed in one of the preceding claims 4 to 10, **characterized in that** $F1$ and/or $F2$ is a constant function.

12. The method as claimed in one of the preceding claims 4 to 10, **characterized in that** $F1$ and/or $F2$ is determined by cos ($\omega3 * t$) + $\lambda$ * $|\Delta X|$ * $[e^{(- q1 * (t - t0) - q2 * |\Delta X|)}$ + cos ($\omega2 * t$)], where $\lambda$, q1 and q2 are further weighting factors.

13. The method as claimed in one of the preceding claims 4 to 10, **characterized in that** $F1$ and/or $F2$ are determined by sin ($\omega3 * t$) + $\lambda$ * $|\Delta X|$ * $[e^{(-q1 * (t - t0) - q2 * |\Delta X|)}$ + sin ($\omega2 * t$)] where $\lambda$, q1 and q2 are further weighting factors.

14. The method as claimed in one of the preceding claims, **characterized in that** the actuator is an electric motor, which transmits a drive torque to the rack by means of a ball-screw drive.

**15.** An electromechanical motor vehicle steering system having a control unit (9), wherein the control unit (9) is set up to carry out a method as claimed in one of the preceding claims 1 to 14.

**Revendications**

**1.** Procédé de réglage d'un mécanisme de commande électrique d'un système de direction assistée électromécanique comportant une unité de réglage, dans lequel

- une grandeur de réglage T1 d'un servomoteur est déterminée, celle-ci étant le couple produit par le servomoteur, dans lequel une valeur de courant théorique et/ou une valeur de tension théorique sont déterminées sur la base de la grandeur de réglage T1, celle-ci étant transmise au servomoteur,
- afin d'obtenir, à partir d'une position réelle X, en tant que variable d'état du mécanisme de commande, qui est la position d'une crémaillère (6) et/ou un angle de pivotement d'une roue,
- une position théorique Xd en tant que position théorique, dans lequel un angle de braquage appliqué à un volant de direction par un conducteur est mesuré dans un capteur de direction (10), à partir de celui-ci, la position théorique Xd est déterminée dans une unité de traitement de signaux (24) et la position théorique Xd déterminée ainsi que la position réelle de la crémaillère (6) ou l'angle de pivotement de la roue (8) sont transmis à l'unité de réglage en tant que valeur réelle X, et selon lequel
- une valeur de réglage du mécanisme de commande électrique est calculée sur la base de la grandeur de réglage T1,
**caractérisé en ce que** la grandeur de réglage T1 du servomoteur est calculée au moyen de la dérivée seconde de la position théorique $d^2Xd/dt^2$ et d'une variation de réglage $\Delta X|_\tau$-$\Delta X|_0$ obtenue, où
$\Delta X|_\tau$ = *Différence position théorique - position réelle à l'instant $\tau$* et
$\Delta X|_0$ = *Différence position théorique - position réelle à l'instant t = t0.*

**2.** Procédé selon la revendication 1, **caractérisé en ce que** la grandeur de réglage T1 du servomoteur est calculée au moyen de la dérivée temporelle de la position réelle dX/dt.

**3.** Procédé selon la revendication 1 ou 2, **caractérisé en ce que** la grandeur de réglage T1 du servomoteur est calculée au moyen de l'intégrale temporelle de l'écart $\Delta X$ entre la position théorique Xd et la position réelle X selon

$$\int_{t0}^{t}\left(\Delta X|_\tau\right)d\tau.$$

**4.** Procédé selon la revendication 1, **caractérisé en ce que** la grandeur de réglage T1 est calculée comme suit

$$T_1 = \frac{1}{UV} * \{Y\},$$

où Y est une somme et a pour opérandes P = $\mu$*a1*K1*($\Delta$X-$\Delta X|_0$) et $DD = U2 * \frac{d^2Xd}{dt^2} * F2$, et où les variables sont définies comme suit :

UV = *rapport de transmission ou gain du régulateur,*
K1,a1 = paramètre d'ajustement,
F2 = fonction de pondération,
U2 = facteur de pondération,
$\mu$ = facteur de pondération.

**5.** Procédé selon la revendication 4, **caractérisé en ce que** la grandeur Y a pour opérandes $I1$ = $\mu$*a1*$\eta$*a2*K1* $\int_{t0}^{t}\left(\Delta X|_\tau\right)d\tau$, où la variable a2 est un paramètre d'ajustement et $\eta$, un facteur de pondération.

**6.** Procédé selon la revendication 4 ou 5, **caractérisé en ce que** la grandeur *Y* a pour opérandes

$$D1 = K1 * \frac{d(\Delta X - \Delta X|_0)}{dt}$$ et/ou $$D2 = U1 * \frac{dX}{dt} * F1,$$ où *U1* est un facteur de pondération et *F1* est une fonction de pondération.

7. Procédé selon la revendication 4 ou 5, **caractérisé en ce que** la grandeur Y a pour opérandes *I2 = a2\*K1\** $\int_{t0}^{t} d(\Delta X|_\tau)/dt \, d\tau$.

8. Procédé selon l'une des revendications 4 à 7 précédentes, **caractérisé en ce que** la grandeur Y a pour opérandes

$$S = \beta 1 * \int_{t0}^{t} SIGNE\left[\frac{d(\Delta X|_\tau)}{dt} + \mu * a1 * (\Delta X|_\tau)\right] * d\tau,$$ où $\beta$1 est un paramètre d'ajustement.

9. Procédé selon l'une des revendications 4 à 8 précédentes, **caractérisé en ce que** la grandeur Y a pour opérandes

$$DD2 = U3 * \frac{d^2 X}{dt^2} * F2,$$ où *U3* est un autre facteur de pondération et F2 est une autre fonction de pondération.

10. Procédé selon l'une des revendications 4 à 9 précédentes, **caractérisé en ce que** la grandeur de réglage T1 du servomoteur est calculée comme suit : $T1 = \frac{1}{UV} * \{Y\},$ avec *Y = P + DD + I1 + D1 + D2 + I2 + S*.

11. Procédé selon l'une des revendications 4 à 10 précédentes, **caractérisé en ce que** *F*1 et/ou *F*2 est une fonction constante.

12. Procédé selon l'une des revendications 4 à 10 précédentes, **caractérisé en ce que** *F*1 et/ou *F*2 est déterminé par $cos(\omega 3 * t) + \lambda * |\Delta X| * [e^{(-q1 * (t - t0) - q2 * |\Delta X|)} + cos(\omega 2 * t)]$, où $\lambda$, q1 et q2 sont d'autres facteurs de pondération.

13. Procédé selon l'une des revendications 4 à 10 précédentes, **caractérisé en ce que** *F*1 et/ou *F*2 est déterminé par $sin(\omega 3 * t) + \lambda * |\Delta X| * [e^{(-q1 * (t - t0) - q2 * |\Delta X|)} + sin(\omega 2 * t)]$, où $\lambda$, q1 et q2 sont d'autres facteurs de pondération.

14. Procédé selon l'une des revendications précédentes, **caractérisé en ce que** le mécanisme de réglage est un moteur électrique qui transmet un couple d'entraînement à la crémaillère au moyen d'une vis d'entraînement à billes.

15. Direction électromécanique de véhicule automobile comprenant une unité de réglage (9), dans laquelle l'unité de réglage (9) est conçue pour mettre en œuvre un procédé selon l'une des revendications 1 à 14 précédentes.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100250068 A1

- EP 1742124 A1